# EUROPÄISCHE PATENTSCHRIFT

(11) **EP 1 391 687 B1**
(45) Veröffentlichungstag und Bekanntmachung des Hinweises auf die Patenterteilung: **08.04.2015**
(21) Anmeldenummer: 03016130.1
(22) Anmeldetag: 16.07.2003
(51) Int. Cl.: G01B 11/02, G01B 11/06

(54) **Vorrichtung zur Messung der Wanddicke eines Rohres in einem Rohrwalzwerk**
Apparatus for mapping the wall thickness of a tube in a mandrel mill
Appareil pour mesurer l'épaisseur d'un tube dans un laminoir à tubes

(30) Priorität: 10.08.2002 DE 10236756
(43) Veröffentlichungstag der Anmeldung: 25.02.2004
(73) Patentinhaber: SMS Meer GmbH, 41069 Mönchengladbach (DE)
(72) Erfinder: Sauerland, Martin, 41068 Mönchengladbach (DE); Deppe, Gerd-Joachim, 47809 Krefeld (DE)
(74) Vertreter: Grosse, Wolf-Dietrich Rüdiger

(56) Entgegenhaltungen:
- US-A- 5 138 644
- US-A- 5 298 977
- US-A- 5 335 308
- US-A- 6 078 397

## Beschreibung

Die Erfindung betrifft eine Vorrichtung zur Messung der Wanddicke eines Rohres in einem Rohrwalzwerk, die einen Messkopf einer Laser-Ultraschall-Messanordnung aufweist, in dem ein Anregungslaser, ein Beleuchtungslaser und eine Sammeloptik zum Auffangen des von der Rohroberfläche in den Messkopf zurückgestreuten Lichts angeordnet sind.

In vielen Bereichen der Technik werden Rohre aus Stahl benötigt, die beispielsweise durch ein Verfahren hergestellt werden können, bei dem zylindrisch geformtes Ausgangsmaterial in einem Schrägwalzwerk unter Einsatz eines axial feststehenden Lochdorns zu einem rohrförmigen Hohlblock umgeformt wird. Zur Umformung des zylindrisch geformten Ausgangsmaterials zu einem nahtlosen Rohr wird das Ausgangsmaterial über den Lochdorn gewalzt. Ein solches Verfahren ist beispielsweise aus der EP 0 940 193 A2 bekannt.

Beim Streckreduzierwalzen und beim Reduzier- und Maßwalzen nahtloser Stahlrohre durchläuft das zu bearbeitende Rohr eine Walzstraße, in der in Förderrichtung des Rohres hintereinander eine Anzahl Walzgerüste angeordnet sind. In jedem Walzgerüst sind Walzen gelagert, die beim Walzvorgang das Rohr jeweils um einen definierten Umfangsabschnitt kontaktieren. Insgesamt wirken dabei in jedem Walzgerüst mehrere, (beispielsweise drei) Walzen so zusammen, dass das Rohr im wesentlichen über seinen gesamten Umfang von den Walzen kontaktiert wird. Das Rohr wird damit auf einen reduzierten Durchmesser gewalzt und dabei auf eine genaue Form gebracht.

Das Rohr soll nach dem Walzen eine ideale Form haben, d. h. die zylindrische Kontur des Außenumfangs und die des Innenumfangs sollen zwei konzentrische Kreise bilden. Tatsächlich gibt es indes stets Toleranzen im Fertigrohr, so dass eine gewisse Exzentrizität der Kreiskontur des Innenumfangs relativ zu derjenigen des Außenumfangs vorliegt.

Der entscheidende Qualitätsparameter bei der Rohrherstellung ist die Rohrwanddicke, die im Produktionsprozess gemessen und überwacht wird. Zur Ermittlung der Wanddicke des Rohres sind Ultraschall-Messverfahren bekannt. Ultraschall-Dicken-Messverfahren nach der Impuls-Echo-Methode ermitteln über die Laufzeitmessung eines Ultraschallimpulses die Wanddicke.

Dabei wird bei der gattungsgemäßen Vorrichtung, wie sie beispielsweise in der US 5,137,361 und in der WO 00/63641 beschrieben ist, ein Anregungslaser eingesetzt, der in die Oberfläche des Rohres einen Ultraschallimpuls einleitet; der Impuls breitet sich in Richtung des Rohrinneren aus und wird an der Innenwand reflektiert. Das an die Außenwand-Oberfläche zurücklaufende Signal wird dort erfasst, indem ein Beleuchtungslaser auf die Rohroberfläche gerichtet wird. Das reflektierte Signal wird einem Interferometer zugeleitet, wobei ein konfokales Fabry-Perot-Interferometer zum Einsatz kommt. Eine Auswerteelektronik ermittelt den zeitlichen Abstand zwischen eingeleitetem und reflektiertem Ultraschallsignal, woraus - bei bekannter Schallgeschwindigkeit im Rohr - die Wanddicke errechnet werden kann.

In der US 6 078 397 A wird ein gattungsgemäßes Wanddickenmesssystem offenbart, bei dem die Geschwindigkeit des zu vermessenden Rohres mit zwei optischen Geschwindigkeitsmesselementen gemessen wird. Ein anderes Wanddickenmesssystem zeigt die US 5 138 644 A.

Die US 5 298 977 A beschreibt ein Abstandsmesssystem zur Bestimmung der Höhe von Elektronikkomponenten auf einem Träger. Die US 5 335 308 A offenbart ein Wärmebehandlungssystem, wie es für die Behandlung von Kfz-Karosserien eingesetzt wird.

Für eine präzise und stabile Messung der Wanddicke unter den relativ rauhen Umgebungsbedingungen in einem Rohrwalzwerk ist es erforderlich, dass die Laser-Ultraschall-Messvorrichtung in ihrem optimalen Arbeitspunkt betrieben wird. Eine Voraussetzung dafür ist, dass das Licht des Anregungslasers und das des Beleuchtungslasers sich in einer definierten Lage zueinander befinden. Vor allem muss aber der Abstand zwischen Messgut (Rohr) und Messkopf möglichst genau eingehalten werden.

Dabei hat es sich herausgestellt, dass die Sicherstellung des optimalen Betriebs unter den genannten Umweltbedingungen oft nur sehr schwer möglich ist. Insbesondere ist es in der Walzwerksumgebung sehr schwierig, eine präzise Einstellung der Laser-Ultraschall-Messvorrichtung zu erreichen, was nur über eine regelmäßige Kontrolle der Anlage erfolgen kann. Dabei geht es insbesondere darum, den Abstand des Messkopfes der Laser-Ultraschall-Messvorrichtung zur Rohroberfläche auf einem gewünschten vorgegebenen Wert zu halten, um eine optimale Einkopplung des reflektierten Laserlichts von der Rohroberfläche in die Messvorrichtung sicherzustellen.

Der Erfindung liegt daher die Aufgabe zugrunde, eine Vorrichtung der gattungsgemäßen Art derart weiterzubilden, dass es möglich ist, unter Überwindung der vorstehend beschriebenen Schwierigkeiten stets einen optimalen Betriebspunkt der Laser-Ultraschall-Messvorrichtung sicherzustellen. Damit soll es insbesondere unter rauhen Umgebungsbedingungen im Walzwerk möglich sein, in einfacher Weise den Abstand des Messkopfs von der Rohroberfläche auf das gewünschte Maß einzustellen und auf diesem Wert zu halten.

Diese Aufgabe wird mit der Merkmalskombination des Anspruchs 1 gelöst. Vorteilhafte Weiterbildungen der Erfindung sind Gegenstand der abhängigen Ansprüche.

Mit dieser Ausgestaltung kann in besonders einfacher Weise und schnell geprüft werden, ob sich der Messkopf im richtigen Abstand zur Rohroberfläche befindet. Gegebenenfalls wird der Abstand zwischen Messkopf und Rohr nachgestellt. Dadurch ist es möglich, einen stabilen Betriebspunkt der Laser-Ultraschall-Messvorrichtung unter den rauhen Walzwerksbedingungen in einfacher Weise sicherzustellen, was die Produktivität des Walzwerks und die Qualität des produzierten Rohrs erhöht.

Gemäß einer Weiterbildung ist vorgesehen, dass drei Leuchten an verschiedenen Stellen des Messkopfs befestigt sind.

Mit Vorteil emittieren die Leuchten ein für das menschliche Auge sichtbares Licht. Bevorzugt emittieren die Leuchten Licht unterschiedlicher Farbe.

Als Licht, das sich besonders gut fokussieren lässt, kommt bevorzugt Laserlicht zum Einsatz; daher sind gemäß einer weiteren Fortbildung die Leuchten als Laser ausgeführt. Beim Einsatz von Lasern können dadurch Sicherheitserfordernisses leicht erfüllt werden, dass die Laser Licht geringer Leistung emittieren, das für das menschliche Auge unkritisch, d. h. nicht gesundheitsgefährdend, ist; dabei ist insbesondere daran gedacht, Laser einzusetzen, die den Laserklassen I oder II angehören.

Um in besonders einfacher Weise die richtige Einstellung des Abstandes zwischen Messkopf und Rohroberfläche einstellen zu können, ist ins Auge gefasst, dass der Messkopf in Richtung der Normalen auf die Oberfläche des Rohres verschieblich angeordnet ist. Hierfür sind bevorzugt Bewegungsmittel vorgesehen, insbesondere ein Linearaktuator mit elektrischem Schrittmotor, mit denen der Messkopf in Richtung der Rohroberflächennormalen verschoben werden kann. stellt. Aus der Zeit für das - zweimalige - Durchlaufen eines Ultraschallimpulses durch die Wand des Rohres 1 ergibt sich bei bekannter Schallgeschwindigkeit im Material des Rohres 1 die gesuchte Wanddicke D. Die Ankopplung des Ultraschalls bei der Heißwanddickenmessung mit Temperaturen im Bereich von ca. 1.000 °C erfordert sowohl auf der Anregungs- als auch auf der Detektionsseite berührungslose, optische Methoden, bei denen der Messkopf 2 der Laser-Ultraschall-Wanddicken-Messeinrichtung selber in einem thermisch sicheren Abstand zum Rohr 1 verbleiben kann. Der typische Abstand a im Betrieb beträgt dabei etwa 160 mm; dieser muss möglichst genau eingehalten werden, um sowohl die Ultraschallschwingungen im Rohr optimal anregen als auch das von der Rohroberfläche reflektierte Licht bestmöglich einfangen und das Signal auswerten zu können.

Hochenergetische Licht-Pulse im Infrarotbereich werden in der Rohroberfläche absorbiert. Sie werden von einem auf die Rohrwand ausgerichteten, blitzlampengepumpten Nd:YAG-Laser 3 (Anregungslaser) erzeugt, der eine Wellenlänge von 1.064 nm bei einer Pulsdauer von weniger als 10 ns haben kann. Die vom Laser 3 auf die Rohroberfläche aufgebrachte Energie, die von der Rohrwand absorbiert wird, führt teilweise zur Verdampfung einer sehr dünnen Oberflächenschicht (Materialablation im nm-Bereich). Durch den Verdampfungs-lmpuls entsteht - wegen der Impulserhaltung - im Rohr 1 ein Ultraschall-Impuls, der senkrecht zur Rohroberfläche in die Rohrwand läuft. Der Ultraschall-Impuls wird an der Rohr-Innenoberfläche reflektiert, läuft zurück zur Rohr-Außenoberfläche, wird erneut reflektiert usw., so dass in der Rohrwand eine Ultraschall-Echofolge abnehmender Amplitude entsteht.

Der reflektierte Ultraschallimpuls erzeugt auf der Rohr-Außenoberfläche Schwingungen (im Sub-Miniaturbereich), die mittels eines zweiten Lasers 4 (Beleuchtungslaser) berührungslos unter Nutzung des Doppler-Effekts erfasst werden. Dieser Laser 4 kann ein CW-Laser sein (Continuous Wave Laser), namentlich ein in der Frequenz verdoppelter, diodengepumpter Nd:YAG-Laser, der mit einer Wellenlänge von 532 nm arbeitet und auf den Punkt der Anregung ausgerichtet ist. Die im Vergleich zur Lichtfrequenz niederfrequente Ultraschallschwingung führt zu einer Frequenz-Modulation des an der Materialoberfläche reflektierten Lichts.

Der reflektierte Lichtkegel, der jetzt "Träger" des Ultraschallsignales ist, wird über eine lichtstarke Sammeloptik 5 (Linse, Objektiv) und einen Lichtwellenleiter 10 einem optischer Analysator, d. h. einem Demodulator, zugeführt, wobei insbesondere ein konfokales Fabry-Pérot-Interferometer (FPI, nicht dargestellt) zum Einsatz kommt; dessen Ausgangssignal beinhaltet bereits die Ultraschall-Echofolge.

Die weitere Verstärkung, Filterung und Signalauswertung der Ultraschall-Echofolge kann mit einer üblichen elektronischen Ultraschall-Auswerteeinheit erfolgen. Das Ausgangssignal der Auswerteeinheit ist die Wanddicke D des Rohres 1, die aus dem Produkt von Schallgeschwindigkeit und gemessenem Zeitintervall bestimmt wird.

Im Fabry-Pérot-Interferometer wird das durch den Lichtwellenleiter 10 zugeleitete Licht analysiert. Über der Frequenz des Lichts ergibt sich- infolge von Resonanzen - eine Intensitätsverteilung bekannter Art, die die für ein Fabry-Pérot-Interferometer typischen Peaks aufweist.

Der Lichtwellenleiter 10 weist eine begrenzte numerische Apertur auf. Damit dennoch ein hinreichend großes Lichtsignal von der Sammeloptik 5 in den Lichtwellenleiter 10 eingekoppelt werden kann, ist es erforderlich, den zur Einkopplung notwendigen Faserkoppler 11 möglichst exakt zur Sammeloptik 5 auszurichten, so dass die Einkoppelstelle des Faserkopplers 11 genau im Brennpunkt der Sammeloptik liegt.

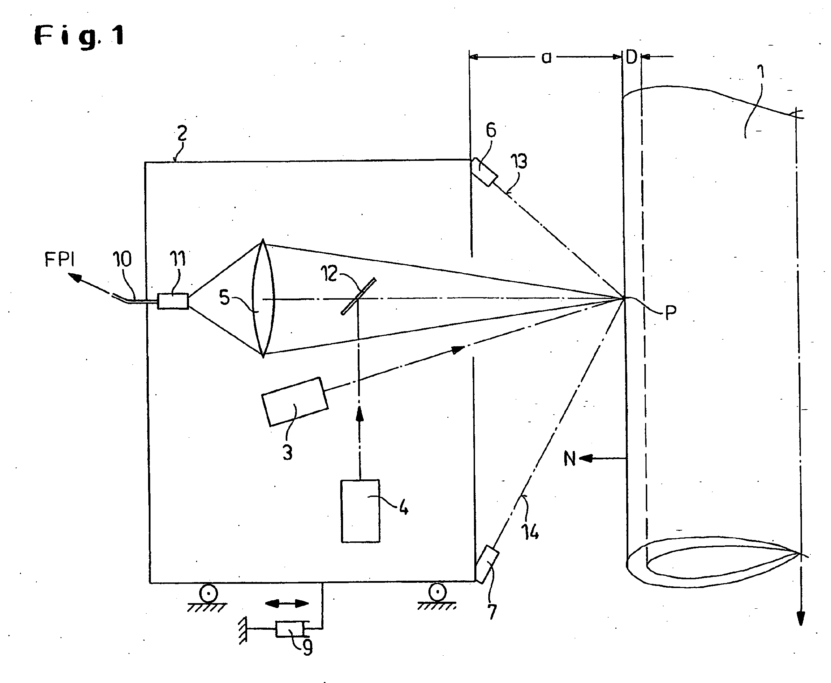

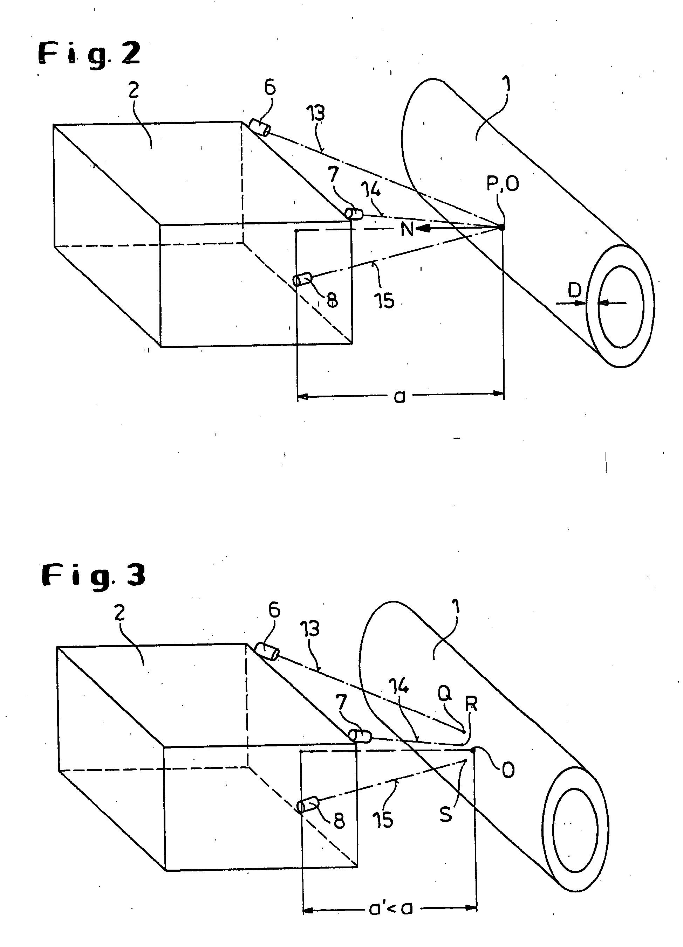

Um sowohl die Ultraschallschwingungen im Rohr 1 durch den Anregungslaser 3 optimal anzuregen als auch das von der Rohroberfläche reflektierte Licht bestmöglich einzufangen - über den Beleuchtungslaser 4, einen Umlenkspiegel 12 und die Sammeloptik 5 -, muss der Abstand a zwischen Messkopf 2 und Rohr 1 in Richtung der Normalen N auf das Rohr 1 möglichst genau einem vorgegebenen Wert entsprechen, der sich aus der Anordnung der Laser 3 und 4 ergibt, wie es leicht in Fig. 1 zu erkennen ist; in dieser Figur ist der richtige Abstand a zwischen Messkopf 2 und Rohr 1 dargestellt. Um prüfen zu können, ob der Abstand a stimmt, sind am Messkopf 2 drei Leuchten 6, 7 und 8 in ausgerichteter Stellung fest angeordnet, die ein scharf fokussiertes Licht emittieren. Es kommen namentlich Laser mit geringer Leistungsemission zum Einsatz, die ein für das menschliche Auge unschädliche Licht abstrahlen. In Fig. 1 sind nur zwei Laser 6 und 7 skizziert; wie in den Figuren 2 bis 4 zu sehen ist, sind insgesamt jedoch drei Laser 6, 7, 8 am Messkopf 2 befestigt. Alle drei Laserleuchten 6, 7, 8 senden Licht unterschiedlicher Farbe aus.

Zur Prüfung des richtigen Abstandes a zwischen Oberfläche des Rohres 1 und dem Messkopf 2 wird wie folgt vorgegangen: Bei ausgeschalteten Lasern 3 und 4 (s. Fig. 1) werden die drei Laserleuchten 6, 7, 8 eingeschaltet. Die drei Leuchten 6, 7, 8 sind so am Messkopf 2 befestigt, dass sich die drei fokussierten Lichtstrahlen 13,14 und 15 der drei Laser 6, 7 und 8 genau in demjenigen Schnittpunkt P treffen, an dem sich die Oberfläche des Rohres 1 befinden muss, wenn das Rohr 1 zwecks Messung der Wanddicke D den Messkopf 2 passiert. Ist dies der Fall, liegt zwischen Messkopf 2 und Rohr 1 genau der richtige Abstand a vor.

In Fig. 2 ist der Zustand skizziert, bei dem das der Fall ist: Die drei Laserleuchten 6, 7, 8 erzeugen auf der Rohroberfläche den einzigen Beleuchtungspunkt P, was nachweist, dass der Abstand a stimmt.

In Fig. 3 ist indes zu sehen, dass hier ein zu kleiner Abstand a' zwischen Messkopf 2 und Rohr 1 vorliegt. Statt sich in dem Punkt O - dies ist der Schnittpunkt der auf den Messkopf 2 gerichteten Oberflächennormalen N mit der Rohroberfläche - zu schneiden, bilden die drei Laserleuchten 6, 7, 8 drei verschiedene Punkte Q, R und S auf der Rohroberfläche ab, was in einfacher Weise zeigt, dass der Abstand a' nicht dem richtigen Abstand a entspricht.

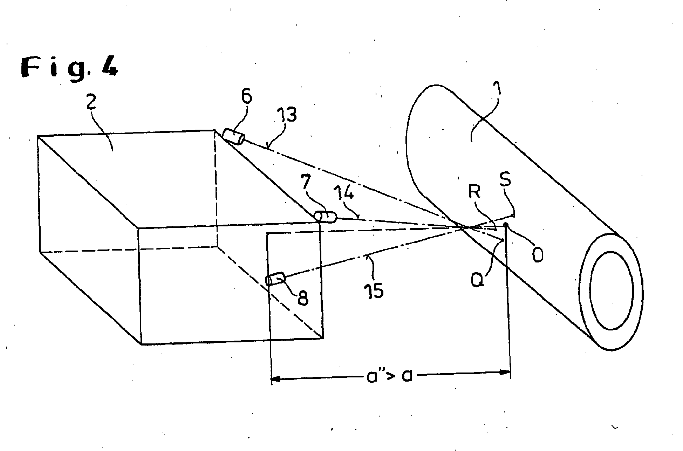

Dasselbe Bild ergibt sich bei der Konstellation, die in Fig. 4 skizziert ist. Hier ist der Abstand a" zwischen Messkopf 2 und Rohr 1 zu groß, d. h. größer als der richtige Abstand a. Auch hier hinterlassen die drei Laser 6, 7, 8 drei verschiedene Punkte Q, R, S auf der Rohroberfläche, anstatt sich im Punkt O zu schneiden.

Der Messkopf 2 ist auf nur sehr schematisch skizzierten Bewegungsmitteln 9 (s. Fig. 1) so angeordnet, dass er relativ zum Rohr 1 in Normalenrichtung N verfahren werden kann (s. Doppelpfeil in Fig. 1). Bevorzugt kommt hier ein elektrischer Antrieb mit Schrittmotor zum Einsatz, der es ermöglicht, den Abstand a feinfühlig zu variieren.

Liegt die Situation vor, die in den Figuren 3 und 4 skizziert ist (unkorrekter Abstand a' bzw. a"), kann durch Beobachten der Bildpunkte Q, R und S der drei Laser 6, 7, 8 und gleichzeitiges Betätigen der Bewegungsmittel 9 eine Bewegung des Messkopfs 2 relativ zum Rohr 1 so lange veranlasst werden, bis sich die drei Punkte Q, R und S im Punkt O vereinigen und damit der Zustand erreicht ist, der in Fig. 2 skizziert ist.

Ist der Abstand a zwischen Messkopf 2 und Rohr 1 zu klein (s. Fig. 3), rücken die drei Punkte Q, R, S bei sich vergrößerndem Abstand a zusammen, um sich schließlich im Punkt O beim richtigen Abstand a zu vereinigen. Im umgekehrten Falle (s. Fig. 4) rücken die drei Punkte Q, R, S dann zusammen, wenn der Abstand a reduziert wird. Der Einsatz dreier Laser 6, 7, 8 mit unterschiedlichen Farben erleichtert es dem Personal, zu erkennen, ob ein zu großer oder ein zu kleiner Abstand zwischen Messkopf 2 und Rohr 1 vorliegt.

In gewünschten vorgegeben Zeitabständen kann erneut geprüft werden, ob sich ein Bild ergibt, das demjenigen gemäß Fig. 2 entspricht. Der Vorteil der vorgeschlagenen Vorrichtung besteht darin, dass die in Rede stehende Prüfung des Abstands a des Messkopfs 2 vom Rohr 1 sehr schnell und einfach bewerkstelligt werden kann.

Die Laser-Ultraschall-Wanddicken-Messeinrichtung kann damit in einfacher und somit auch kostengünstiger Weise in ihrem optimalen Arbeitspunkt gehalten werden, was die Qualität der Wanddickenmessung und damit auch des gesamten Rohrwalzprozesses positiv beeinflusst.

### Bezugszeichenliste:

- 1: Rohr
- 2: Messkopf
- 3: Anregungslaser
- 4: Beleuchtungslaser
- 5: Sammeloptik (Linse, Objektiv)
- 6: Leuchte (Laser)
- 7: Leuchte (Laser)
- 8: Leuchte (Laser)
- 9: Bewegungsmittel
- 10: Lichtwellenleiter
- 11: Faserkoppler
- 12: Umlenkspiegel
- 13: Lichtstrahl
- 14: Lichtstrahl
- 15: Lichtstrahl

- D: Wanddicke des Rohrs
- a: Abstand
- a': zu kleiner Abstand
- a": zu großer Abstand
- N: Normale
- P: Schnittpunkt
- O: Punkt auf der Rohroberfläche
- Q: Punkt auf der Rohroberfläche
- R: Punkt auf der Rohroberfläche
- S: Punkt auf der Rohroberfläche

## Patentansprüche

1. Vorrichtung zur Messung der Wanddicke (D) eines Rohres (1) in einem Rohrwalzwerk, die einen Messkopf (2) einer Laser-Ultraschall-Messanordnung aufweist, in dem ein Anregungslaser (3), ein Beleuchtungslaser (4) und eine Sammeloptik (5) zum Auffangen des von der Rohroberfläche in den Messkopf (2) zurückgestreuten Lichts angeordnet sind, wobei
am Messkopf (2) mindestens zwei ein gebündeltes Licht aussendende und an verschiedenen Stellen des Messkopfs (2) befestigte Leuchten (6, 7, 8) angeordnet sind,
**dadurch gekennzeichnet,**
**dass** die Leuchten (6, 7, 8) so angeordnet und ausgerichtet sind, dass sich ihre gebündelten Lichtstrahlen auf der Oberfläche des Rohres (1) schneiden, wenn sich das Rohr (1) in einem vorgegebenen Abstand (a) zum Messkopf (2) befindet, wobei der Messkopf (2) In Richtung der Normalen (N) auf die Oberfläche des Rohres (1) verschieblich angeordnet ist.

2. Vorrichtung nach Anspruch 1,
**dadurch gekennzeichnet,**
**dass** drei Leuchten (6, 7, 8) verteilt am Messkopf (2) befestigt sind.

3. Vorrichtung nach einem der Ansprüche 1 oder 2,
**dadurch gekennzeichnet,**
**dass** die Leuchten (6, 7, 8) ein für das menschliche Auge sichtbares Licht emittieren.

4. Vorrichtung nach Anspruch 3,
**dadurch gekennzeichnet,**
**dass** die Leuchten (6, 7, 8) Licht unterschiedlicher Farbe emittieren.

5. Vorrichtung nach einem der Ansprüche 1 bis 4,
**gekennzeichnet durch,**
als Leuchten (6, 7, 8) eingesetzte Laser.

6. Vorrichtung nach einem der Ansprüche 1 bis 5,
**gekennzeichnet durch**
Bewegungsmittel (9), insbesondere ein Linearaktuator mit elektrischem Schrittmotor, mit denen der Messkopf (2) in Richtung der Normalen (N) auf die Oberfläche des Rohres (1) verschiebbar ist.

## Claims

1. A device for measuring the wall thickness (D) of a pipe (1) in a pipe rolling mill, which has a sensor head (2) of a laser ultrasonic measuring arrangement, in which an excitation laser (3), an illuminating laser (4) and a converging optical system (5) are arranged for capturing the light back-scattered by the pipe surface into the sensor head (2),
wherein
at least two lamps (6, 7, 8) emitting a bundled light and fastened at various points on the sensor head (2) are arranged on the sensor head (2),
**characterised**
**in that** the lamps (6, 7, 8) are arranged and aligned such that the bundled light beams thereof intersect on the surface of the pipe (1) if the pipe (1) is located at a predetermined spacing (a) from the sensor head (2), wherein the sensor head (2) is arranged displaceably in the direction of the normal (N) to the surface of the pipe (1).

2. The device according to Claim 1,
**characterised**
**in that** three lamps (6, 7, 8) are fastened in a distributed manner on the sensor head (2).

3. The device according to one of Claims 1 or 2,
**characterised**
**in that** the lamps (6, 7, 8) emit a light that is visible for the human eye.

4. The device according to Claim 3,
**characterised**
**in that** the lamps (6, 7, 8) emit light of different colours.

5. The device according to one of Claims 1 to 4,
**characterised by**
lasers used as lamps (6, 7, 8).

6. The device according to one of Claims 1 to 5,
**characterised by**
movement means (9), particularly a linear actuator with electrical step motor, using which the sensor head (2) can be displaced in the direction of the normal (N) to the surface of the pipe (1).

## Revendications

1. Dispositif pour la mesure de l'épaisseur de paroi (D) d'un tube (1) dans un laminoir à tubes, lequel présente une tête de mesure (2) d'un agencement de mesure par ultrasons laser, dans laquelle sont disposés un laser d'excitation (3), un laser d'éclairage (4) et une optique collectrice (5) pour collecter la lumière rétrodiffusée par la surface du tube dans la tête de mesure (2),
dans lequel au moins deux systèmes d'éclairage (6, 7, 8) émettant une lumière en faisceau et fixés à divers endroits de la tête de mesure (2) sont disposés sur la tête de mesure (2),
**caractérisé en ce que**
les systèmes d'éclairage (6, 7, 8) sont disposés et orientés de manière à ce que leurs rayons lumineux en faisceau se coupent à la surface du tube (1) lorsque le tube (1) se trouve à une distance (a) prédéfinie par rapport à la tête de mesure (2), la tête de mesure (2) étant disposée de manière à pouvoir se déplacer en direction de la normale (N) sur la surface du tube (1).

2. Dispositif selon la revendication 1,
**caractérisé en ce que**
trois systèmes d'éclairage (6, 7, 8) sont fixés de manière répartie sur la tête de mesure (2).

3. Dispositif selon l'une des revendications 1 ou 2,
**caractérisé en ce que**
les systèmes d'éclairage (6, 7, 8) émettent une lumière visible pour un oeil humain.

4. Dispositif selon la revendication 3,
**caractérisé en ce que**
les systèmes d'éclairage (6, 7, 8) émettent de la lumière de couleur différente.

5. Dispositif selon l'une des revendications 1 à 4,
**caractérisé par**
des lasers utilisés en tant que systèmes d'éclairage (6, 7, 8).

6. Dispositif selon l'une des revendications 1 à 5,
**caractérisé par**
des moyens de déplacement (9), en particulier un actionneur linéaire avec un moteur électrique pas à pas, avec lesquels la tête de mesure (2) peut être déplacée en direction de la normale (N) sur la surface du tube (1).
